# EUROPEAN PATENT APPLICATION

(11) **EP 3 561 287 A1**
(43) Date of publication of application: **30.10.2019**
(21) Application number: 19168291.3
(22) Date of filing: 10.04.2019
(51) Int. Cl.: F02M 39/02, F02M 37/16

(54) **FUEL DELIVERY SYSTEMS AND METHODS**

(30) Priority: 26.04.2018 US 201815963776
(71) Applicant: Paccar Inc, Bellevue, WA 98004 (US)
(72) Inventor: TRAN, Richard, Campbell, Califonia 95008 (US); MURIAS, Adrian, Mercer Island, Washington 98040 (US)
(74) Representative: Gevers Patents

(57) **Abstract**

An improved fuel injection pump is provided for an internal combustion engine (e.g., diesel engine), and is configured such that the secondary hand pump of the prior art can be eliminated. To achieve this result, the injection pump employs a one-way bearing or clutch on the input side of the drive shaft of the injection pump. By employing a one-way bearing or clutch, such as of the concentric roller type, or other suitable clutch, the fuel injection pump can be operated by direct coupling of the engine and the drive shaft of the fuel injection pump. Also with this configuration, once the engine is stopped, the drive shaft of the fuel injection pump can be manually driven in order to prime the system. Accordingly, by locating a one-way bearing or similar clutch device along the driveline of the fuel injection pump, the fuel injection pump can be both manually operated when the engine is shut off and automatically driven when the engine is running.

## Description

### BACKGROUND

Diesel engines for over-the-road vehicles, such as Class 8 trucks, typically employ a fuel injection pump to distribute fuel from a vehicle's fuel tank to a high-pressure rail of a fuel delivery system. The fuel pump, as well as other accessories, such as the power steering pump, air compressor, etc., are typically driven by rotation of the diesel engine via pulleys, gears or other similar transmissions. In current vehicles, the fuel injection pump is always engaged, and will operate as long as the engine's crankshaft or camshaft is spinning.

Diesel engines of this type also include a secondary hand pump, which is used for priming the fuel delivery system in such cases as when the vehicle is operated to an empty state (i.e., the fuel tank and delivery system is dry) or when the fuel is drained for vehicle service.

### SUMMARY

Embodiments of the present disclosure are directed to fuel delivery systems or fuel injection pumps of fuel delivery systems that aim to provide the above described functionality without the need for the secondary hand pump. Embodiments of the present disclosure are also directed to methods of using the improved fuel delivery systems or fuel injection pumps of fuel delivery systems.

In accordance with one or more aspects of the present disclosure, a method is provided for priming a fuel delivery system of a vehicle having an internal combustion engine. The fuel delivery system has a fuel source, an injection pump, and at least one fuel injector. The method comprises adding fuel to the fuel delivery system when the internal combustion engine is in the non-running state, and thereafter rotating a drive shaft of the injection pump in a pump direction via operator input.

In some embodiments, rotating a drive shaft of an injection pump includes connecting a drive tool to an end of said drive shaft such that the drive tool and the drive shaft are connected for co-rotation.

In some embodiments, connecting a drive tool to an end of said drive shaft includes keying the drive tool to the drive shaft.

In some embodiments, the drive tool is selected from a group consisting of a wrench and a crank lever.

In accordance with another aspect of the present disclosure, an injection pump of a fuel delivery system is provided. The injection pump comprises an injection pump housing, a pump mechanism disposed within the housing, a fuel input, such as an input port, configured to be connectable to a source of fuel at a first pressure, a fuel output, such as an output port, configured to be connectable to at least one fuel injector, and a transmission interface configured to be coupled in driving relationship with an internal combustion engine. The injection pump also includes a pump drive shaft rotatable supported by the injection pump housing and operatively coupled to the pump mechanism. In embodiments of the present disclosure, rotation of the pump drive shaft transmits fuel supplied to the input port at a first pressure to the fuel output port at a second, higher pressure. The injection pump further includes a one-way clutch arrangement coupled between the transmission interface and the pump drive shaft. In some embodiments, the one-way clutch arrangement is configured such that: (1) torque transmitted to the transmission interface by the internal combustion engine in a first rotational direction is transferred to the pump drive shaft; and (2) torque transmitted to the drive shaft in the first direction via operator input is not transferred to the transmission interface.

In some embodiments, the transmission interface includes one of a gear and a pulley.

In some embodiments, the one-way clutch arrangement includes a device selected from the group consisting of a one-way concentric roller bearing, a sprag clutch, and a ratchet clutch.

In some embodiments, a section of the pump drive shaft extends externally of the injection pump housing. In some of these embodiments, the section of the pump drive shaft is configured to be engaged by a drive tool. In some embodiments, the section of the pump drive shaft includes one of a keyed, splined , polygonal socket.

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

### DESCRIPTION OF THE DRAWINGS

The foregoing aspects and many of the attendant advantages of the claimed subject matter will become more readily appreciated as the same become better understood by reference to the following detailed description, when taken in conjunction with the accompanying drawings, wherein:
FIGURE 1 is a schematic representation of one example of a fuel delivery system in accordance with an aspect of the present disclosure;
FIGURE 2 is a schematic representation of one example of an injection pump in accordance with an aspect of the present disclosure;
FIGURE 3A and FIGURE 3B are cross-sectional views of one example of a one-way bearing in accordance with an aspect of the present disclosure.

### DETAILED DESCRIPTION

The detailed description set forth below in connection with the appended drawings where like numerals reference like elements is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed. Similarly, any steps described herein may be interchangeable with other steps, or combinations of steps, in order to achieve the same or substantially similar result.

In the following description, numerous specific details are set forth in order to provide a thorough understanding of exemplary embodiments of the present disclosure. It will be apparent to one skilled in the art, however, that many embodiments of the present disclosure may be practiced without some or all of the specific details. In some instances, well-known process steps have not been described in detail in order not to unnecessarily obscure various aspects of the present disclosure. It will be appreciated that embodiments of the present disclosure may employ any combination of features described herein.

Embodiments of the present disclosure are generally directed to fuel delivery systems, or fuel injection pumps, suitable for use in vehicles, such as Class 8 trucks, that employ internal combustion engines (ICE), such as spark ignition engines or compression ignition engines. Although exemplary embodiments of the present disclosure will be described hereinafter with reference to a diesel vehicle, such as a heavy duty truck, it will be appreciated that aspects of the present disclosure have wide application, and therefore, may be suitable for use with many other types of vehicles that employ engine driven fuel pumps, including but not limited to light & medium duty vehicles, passenger vehicles, motor homes, buses, commercial vehicles, marine vessels, et. Accordingly, the following descriptions and illustrations herein should be considered illustrative in nature, and thus, not limiting the scope of the present disclosure, as claimed.

Generally described, embodiments of the present disclosure are directed to an improved fuel injection pump for an internal combustion engine (e.g., diesel engine) configured such that the secondary hand pump of the prior art, typically used for priming, can be eliminated. To achieve this result, representative embodiments of the present disclosure employ a one-way bearing or clutch on, for example, the input side of the drive shaft of the injection pump. By employing a one-way bearing or clutch, such as of the concentric roller type, or other suitable clutch, in this manner the fuel injection pump can be: (1) operated by direct coupling of the engine and the drive shaft of the fuel injection; and (2) once the engine is stopped, the drive shaft of the fuel injection pump can be manually driven in order to prime the system. Accordingly, by locating a one-way bearing or similar clutch device along the driveline of the fuel injection pump, the fuel injection pump can be both manually operated when the engine is shut off and automatically driven when the engine is running.

In some embodiments of the present disclosure, the fuel injection pump is configured for user access of the drive shaft in order to impart rotational movement thereto. In some embodiment, the end of the drive shaft is exposed externally of the fuel pump housing so that, with a built-in hex socket or other key-type feature, the drive shaft can be manually turned with a hand crank, a power drill (e.g., hydraulic, pneumatic, electric, etc.), etc. In other embodiments, the end of the drive shaft can be coupled to a drive assembly that can be selectively connected (via a suitable clutch arrangement) to an external power supply, such as an electric motor, a pneumatic motor, etc.

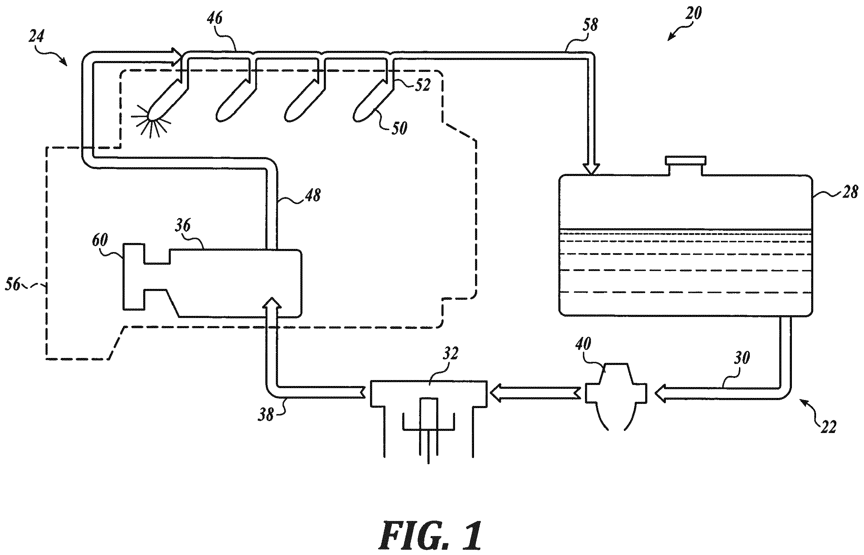

Referring now to FIGURE 1, there is shown a schematic representation of a representative fuel delivery system, generally designated 20, in accordance with aspect of the present disclosure. As shown FIGURE 1, the fuel delivery system 20 includes a low pressure side 22 and a high pressure side 24. The low pressure side 22 of the fuel delivery system includes a fuel reservoir, tank or other fuel source 28 connected via a fuel supply line 30 to a fuel filter 32, sometimes referred to as a fuel separator in diesel engines. The fuel filter 32, in turn, is connected to the input port of a primary or injection pump 36 via fuel supply line 38. One or more optional lift pumps 40, sometimes referred to as sending units, can be used to pump fuel from the fuel source 28 to the fuel filter 32, and in some embodiments, through the fuel filter to the injection pump 36.

In the embodiment shown, the high pressure side 24 of the fuel delivery system 20 includes a fuel distribution unit 46, shown as a common rail, connected to the output port of the injector pump 36 via supply line 48. The fuel distribution unit 46, in turn, is connected to a plurality of fuel injectors 50 via rail lines 52. Alternatively, each fuel injector 50 is connected to the injection pump 36 via a separate high pressure supply line. In any case, the fuel injectors 50 distribute pressurized fuel from the injection pump 36 to associated combustion chambers of an ICE 56. In some embodiments, the fuel injectors 50 include a piezoelectric or solenoid valve or other controllable device that can be used to control the amount and timing of the fuel injected into the combustion chamber. Any unused fuel from the fuel distribution unit 46 (or fuel injectors in some embodiments) can be returned to the fuel source 28 via a return line 58. In the embodiment shown, the injection pump 36 is driven (e.g., gear, belt, chain, etc.) via the ICE 56 through transmission interface 60 (e.g., a drive gear, a pulley with integrated shaft, etc.)

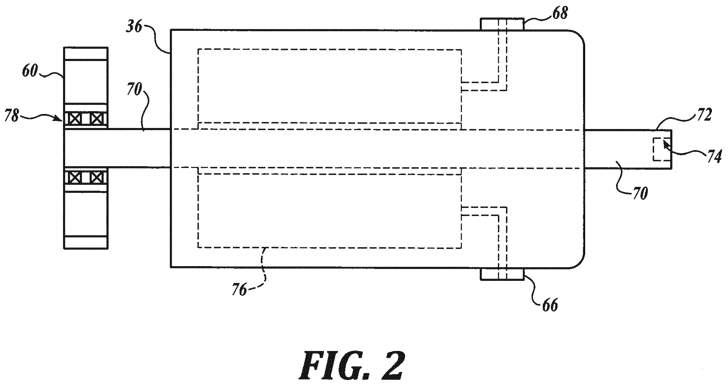

Turning now to FIGURE 2, there is shown a schematic representation of an embodiment of the injection pump 36. As shown in FIGURE 2, the injection pump 36 includes a fuel input port 66 and a fuel output port 68. The injection pump 36 also includes a drive shaft 70 coupled in-between the transmission interface 60 and the pump mechanism 76 of the injection pump 36. In embodiments of the present disclosure, the pump mechanism 76 can be of the vane-type, of the piston/plunger type, etc. In embodiments where the pump mechanism is of the piston/plunger type, a rotary to reciprocating mechanism, such as a camshaft, a cam follower and spring, move the piston/plunger in a reciprocating motion to pump the fuel. In any case, rotation of the drive shaft 70 causes pumping action of the pump mechanism of the injection pump 36 for raising the low pressure fuel at the input port 66 to a higher pressure fuel at the output port 68 and the pressurization of the fuel distribution unit 46.

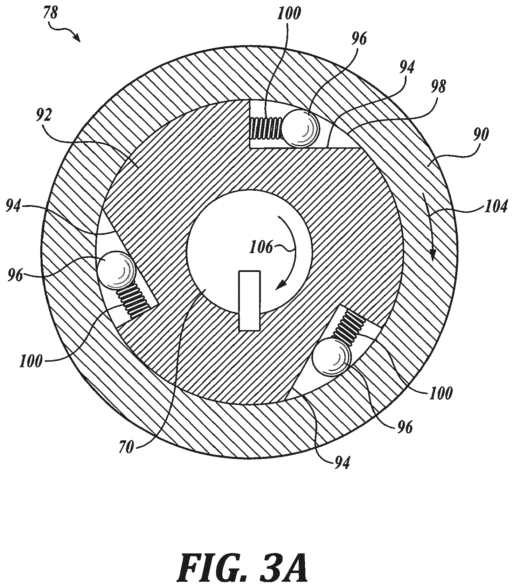

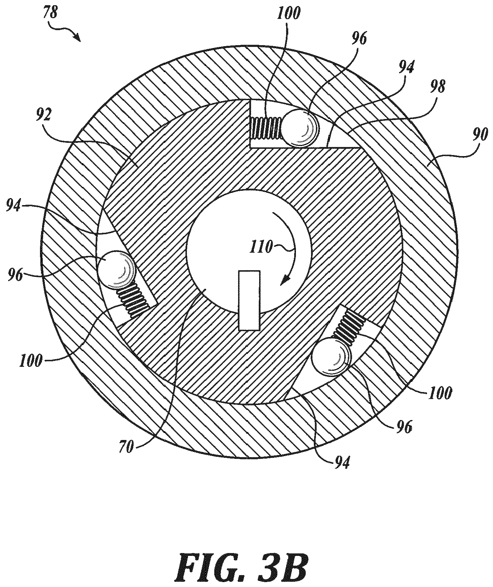

In accordance with an aspect of the present disclosure, a one-way clutch or bearing 78 or other suitable overrunning clutch arrangement is operatively connected between the transmission interface 60 and the drive shaft 70. In use, the one-way clutch or bearing 78, such as of the concentric roller type (see FIGURE 3), the sprag type, the ratchet type, etc., is configured to allow direct coupling of the engine driven transmission interface 60 and the drive shaft 70 of the injection pump 36 such that rotation of the ICE's crankshaft, camshaft, etc., affects rotation of the drive shaft 70 in a drive direction (e.g., clockwise), thereby operating the injection pump 36 via power from the ICE 56. With this configuration, once the engine is stopped, the one-way bearing 78 also provides for the injection pump 36 to be manually driven via the drive shaft 70 in the same direction (e.g., clockwise) in order to prime the fuel delivery system without engagement of the engine.

One example of a one-way bearing 78, such as of the concentric roller type, is illustrated in FIGURE 3. As shown in FIGURE 3, the transmission interface (e.g., drive gear, pulley/shaft, etc.) is provided with a hub 90 which encircles the drive shaft 70 and is rotatable relative thereto. A hub or sleeve 92 is keyed or otherwise fixed for co-rotation with the drive shaft 70. The hub or sleeve 92 is provided with angularly spaced inclined notches 94 in which are positioned rollers 96. The rollers 96 are urged into engagement with the inner surface 98 of the hub 90 by springs 100. These rollers 96 provide an overrunning clutch which permits the drive shaft 70 to rotate freely in one direction. In use, the overrunning clutch permits rotation (clockwise as shown by arrow 104) of the hub 90 to drive the drive shaft 70 in the clockwise direction (as shown by arrow 106), as shown in FIGURE 3A. In further use, the overrunning clutch permits free rotation of the drive shaft 70 in the clockwise direction (as shown by arrow 110 in FIGURE 3B) by external means, such as a manual tool, etc., without engaging the hub 90. In other words, when the drive shaft 70 is driven in the clockwise direction, the hub 90 remains stationary as no torque is transferred by the overrunning clutch from the drive shaft 70 to the hub 90. As such, the drive shaft 70 can be driven, for example manually, without imparting torque onto the engine of the vehicle.

In some embodiments, the drive shaft 70 (shown in FIGURE 2) extends externally of the injection pump housing, the end 72 of which is accessible to the operator or technician when, for example, the vehicle hood is open. In other embodiments, the end of the drive shaft 72 is accessible through the housing. In any case, to facilitate manual rotation, the end of the drive shaft 70 is formed with an inner bore 74 that is keyed, splined, or otherwise forms a socket (e.g., hexagonal) or other suitable configuration for cooperative rotatable engagement with a drive tool, such as a hand crank. In other embodiments, the outer circumference of the drive shaft 70 towards the end thereof can be formed with a hex bolt head or other configuration that can be engaged and rotated by a drive tool, such as a wrench, etc. In other embodiments, a gear can be keyed or otherwise fixed for rotation to the outer perimeter of the drive shaft 70. In these embodiments, the gear can be selectively engageable and rotatable by a powered priming motor, such as an electric motor, a hydraulic or pneumatic motor, etc.

The configuration of the injection pump with the one-way bearing provides one or more advantages over the prior art. For example, in situations where the vehicle has been operated to the fuel empty state, wherein the fuel filter and fuel source are dry, when the fuel system has been drained for service (e.g., fuel filter replacement, etc.), etc., the injection pump 36 can be operated to prime the fuel delivery system without use of the ICE. For example, once fuel as added to the system, e.g., to the fuel source 28 and/or into the fuel filter 32, etc., the operator or technician can rotate the drive shaft 70 via a suitable drive tool (in the clockwise direction in the embodiments shown, although the one-way bearing can be configured to overrun in the counterclockwise direction). Rotation of the drive shaft 70 via the drive tool operates the pump mechanism 76 of the injection pump 36 to draw fuel through the fuel filter and/or to pressurize the fuel for distribution by the fuel distribution unit 46. Operation of the injection pump 36 may also bleed off any air present in the system. In some embodiments, the lift pumps can be operated separate from the ignition switch to aid in the supply of fuel from the fuel source 28 to the injection pump 36. Once the operator turns over the engine, and the engine begins to run, the injection pump 36 once again is driven by the engine via the transmission interface 60. Thus, the fuel delivery system can be primed with the injection pump 36 without need of a secondary hand pump. Once the engine is turned off again, the drive shaft 70 can then again be rotated manually with a drive tool.

It should be noted that for purposes of this disclosure, terminology such as "upper," "lower," "vertical," "horizontal," "fore," "aft," "inner," "outer," "front," "rear," etc., should be construed as descriptive and not limiting the scope of the claimed subject matter. Further, the use of "including," "comprising," or "having" and variations thereof herein is meant to encompass the items listed thereafter and equivalents thereof as well as additional items. Unless limited otherwise, the terms "connected," "coupled," and variations thereof herein are used broadly and encompass direct and indirect physical or electrical connections or couplings. For the purposes of the present disclosure, the phrase "A and/or B" means "(A), (B), or (A and B)." For the purposes of the present disclosure, the phrase "at least one of A, B, and C" means "(A), (B), (C), (A and B), (A and C), (B and C), or (A, B and C)."

The principles, representative embodiments, and modes of operation of the present disclosure have been described in the foregoing description. However, aspects of the present disclosure which are intended to be protected are not to be construed as limited to the particular embodiments disclosed. Further, the embodiments described herein are to be regarded as illustrative rather than restrictive. It will be appreciated that variations and changes may be made by others, and equivalents employed, without departing from the spirit of the present disclosure. Accordingly, it is expressly intended that all such variations, changes, and equivalents fall within the spirit and scope of the present disclosure, as claimed.

## Claims

1. A method for priming a fuel delivery system of a vehicle having an internal combustion engine, the fuel delivery system having a fuel source, an injection pump, and at least one fuel injector, the method comprising:
when the internal combustion engine is in the non-running state, adding fuel to the fuel delivery system; thereafter
rotating a drive shaft of the injection pump in a pump direction via operator input.

2. The method of Claim 1, wherein said rotating a drive shaft of an injection pump includes connecting a drive tool to an end of said drive shaft such that the drive tool and the drive shaft are connected for co-rotation.

3. The method of Claim 2, wherein connecting a drive tool to an end of said drive shaft includes keying the drive tool to the drive shaft.

4. The method of Claim 2, wherein the drive tool is selected from a group consisting of a wrench and a crank lever.

5. An injection pump of a fuel delivery system, the injection pump comprising:
an injection pump housing;
a pump mechanism disposed within the housing;
a fuel input port configured to be connectable to a source of fuel at a first pressure;
a fuel output port configured to be connectable to at least one fuel injector;
a transmission interface configured to be coupled in driving relationship with an internal combustion engine;
a pump drive shaft rotatable supported by the injection pump housing and operatively coupled to the pump mechanism, wherein rotation of the pump drive shaft transmits fuel supplied to the input port at a first pressure to the fuel output port at a second, higher pressure; and
a one-way clutch arrangement coupled between the transmission interface and the pump drive shaft, wherein the one-way clutch arrangement is configured such that: (1) torque transmitted to the transmission interface by the internal combustion engine in a first rotational direction is transferred to the pump drive shaft; and (2) torque transmitted to the drive shaft in the first direction via operator input is not transferred to the transmission interface.

6. The injection pump of Claim 5, wherein the transmission interface includes one of a gear and a pulley.

7. The injection pump of Claim 5, wherein the one-way clutch arrangement includes a device selected from the group consisting of a one-way concentric roller bearing, a sprag clutch, and a ratchet clutch.

8. The injection pump of Claim 5, wherein a section of the pump drive shaft extends externally of the injection pump housing.

9. The injection pump of Claim 8, wherein the section of the pump drive shaft is configured to be engaged by a drive tool

10. The injection pump of Claim 8, wherein the section of the pump drive shaft includes one of a keyed, splined , polygonal socket.
